# EUROPÄISCHE PATENTSCHRIFT

(11) **EP 1 247 560 B1**
(45) Veröffentlichungstag und Bekanntmachung des Hinweises auf die Patenterteilung: **23.06.2004**
(21) Anmeldenummer: 01108344.1
(22) Anmeldetag: 03.04.2001
(51) Int. Cl.: B01D 71/56, D06N 3/12

(54) **Porenfreie atmungsaktive Membran enthaltend Polyamid 4.6**
Porefree breathable menbrane comprising polyamide 4.6
Membrane sans pores respirante comprenant polyamide 4.6

(43) Veröffentlichungstag der Anmeldung: 09.10.2002
(73) Patentinhaber: Sympatex Technologies GmbH, 42103 Wuppertal (DE)
(72) Erfinder: Böhringer, Bertram Kurt, Dr., 42115 Wuppertal (DE); Spijkers, Josef Christiaan, 42781 Haan (DE); Van de Ven, Henricus Joannes Maria, 6825 CT Arnhem (NL)
(74) Vertreter: Muth, Arno, Dipl.-Ing.

(56) Entgegenhaltungen:
- EP-A- 0 448 647
- US-A- 4 701 377
- DATABASE WPI Week 199510 Derwent Publications Ltd., London, GB; AN 1995-070467 XP002172640 & JP 06 345963 A (NIPPON GOSEI KK.), 20. Dezember 1994 (1994-12-20)

## Beschreibung

Die vorliegende Erfindung betrifft ein Verfahren zur Herstellung einer Membran, die atmungsaktiv, d.h. wasserundurchlässig und wasserdampfdurchlässig ist, und eine nach diesem Verfahren herstellbare Membran.

Atmungsaktive Membranen werden bekanntlich zur Erhöhung des Tragekomforts in Kleidungsstücke eingearbeitet.

Atmungsaktive Membranen aus nichtporösem Polyetherester, Polyetheramid oder Polyurethan sind bekannt. Jedoch weisen sie eine Wärmebeständigkeit auf, die für den Einsatz in Wärmeschutzkleidung nicht ausreicht.

Für Kleidungsstücke, die einen hohen Wärmeschutz'aufweisen müssen, z.B. für Feuerwehrschutzkleidung, ist eine hinreichend wärmebeständige atmungsaktive Membran aus porösem Polytetrafluorethylen (PTFE) bekannt. Jedoch kann diese PTFE-Membran aufgrund ihrer porösen Struktur sowohl durch Verstopfung der Poren, wodurch ihre Wasserdampfdurchlässigkeit sinkt, als auch durch Benetzung der Poren mit Tensiden, wodurch ihre Wasserundurchlässigkeit nicht mehr gegeben ist, in ihrer Atmungsaktivität beeinträchtigt werden. Ferner ist die Recycelbarkeit im Vergleich zum atmungsaktiven Laminaten aus Polyetherester, Polyetheramid oder Polyurethan erschwert.

Somit stellt sich die vorliegende Erfindung die Aufgabe, ein Verfahren zu Herstellung einer atmungsaktiven, für den Einsatz in Wärmeschutzkleidung geeigneten Membran zur Verfügung zu stellen, welche die Nachteile der bekannten atmungsaktiven Membranen zumindest deutlich verringert.

Die der Erfindung zugrunde liegende Aufgabe wird gelöst durch ein Verfahren zur Herstellung einer porenfreien atmungsaktiven Membran umfassend die Schritte
a) Zur Verfügung stellen von Pellets, welche aus Polyamid 4.6 und gegebenenfalls aus einem Antioxidans bestehen, wobei die Pellets aus einem Pulver gepresst wurden, das zumindest aus dem bei der Herstellung von Polyamid 4.6 anfallenden Polyamid 4.6 - Pulver besteht,
b) Zuführen der Pellets in einen Extruder,
c) Überführen der Pellets im Extruder in eine Schmelze,
d) Extrudieren der Schmelze in einer Menge von 10,0 bis 20,0 kg/h durch eine Schlitzdüse mit einer Schlitzdicke von 0,4 bis 0,8 mm und einer Schlitzbreite von 600 bis 1000 mm zur Bildung eines Films auf eine bewegte Fläche, die sich mit einer Geschwindigkeit von 5,2 bis 43,1 m/min bewegt,
e) Abziehen des Films von der bewegten Fläche mit einer Geschwindigkeit von 5,3 bis 44,0 m/min,
f) Führen des Films über eine Kühlwalze, die sich mit einer Geschwindigkeit von 5,3 bis 44,0 m/min bewegt und
g) Aufwickeln der erhaltenen Membran mit einer Geschwindigkeit von 5,5 bis 47,0 m/min.

Das erfindungsgemäße Verfahren ergibt eine Membran, die nicht nur in hohem Maße atmungsaktiv ist, sondern auch eine im Vergleich zu den atmungaktiven Membranen aus Polyetherester, Polyetheramid oder Polyurethan höhere Wärmebeständigkeit zeigt.

Unter dem Polyamid 4.6 - Pulver, das in Schritt a) des erfindungsgemäßen Verfahrens zur Herstellung der Pellets eingesetzt wird, ist erfindungsgemäß nicht nur Polyamid 4.6 - Pulver, d.h. Polytetramethylenadipamid - Pulver, sondern auch ein Copolymer - Pulver zu verstehen, das aus mindestens 90 % Polytetramethylenadipamid - Einheiten und aus einem Comonomeren, wie z.B. Caprolactam besteht, wobei der Comonomeren Anteil vorzugsweise 5 bis 6 % beträgt.

Setzt man in Schritt a) des erfindungsgemäßen Verfahrens zur Herstellung der Pellets zusätzlich zum Polyamid 4.6 ein Antioxidans ein, resultiert eine Membran mit einer noch weiter erhöhten Wärmebeständigkeit, so dass die ein Antioxidans enthaltende erfindungsgemäße Membran den weiter unten im Detail beschriebenen Ofenund Wasserdichtigkeitstest besteht. Deshalb werden in einer bevorzugten Ausführungsform des erfindungsgemäßen Verfahrens in Schritt a) die Pellets aus einem Pulver gepresst, das aus dem bei der Herstellung von Polyamid 4.6 angefallenen Polyamid 4.6 - Pulver und aus einem Antioxidans besteht, wobei als Antioxidans beispielsweise Irganox® 1098 oder Irganox® 1330 von Ciba Geigy oder das KaliumiodidlKupferiodid-System dient.

Alternativ kann man im erfindungsgemäßen Verfahren in Schritt a) zuerst Pellets aus dem bei der Herstellung von Polyamid 4.6 angefallenen Polyamid 4.6 - Pulver pressen und anschließend mit einem Antioxidans panieren.

Vorzugsweise beträgt der in Schritt a) des erfindungsgemäßen Verfahrens eingesetzte Anteil an Antioxidans bezogen auf das Polyamid 4.6 0,1 bis 1 Gew.-%, besonders bevorzugt von 0,1 bis 0,5 Gew.%.

In einer weiteren bevorzugten Ausführungsform des erfindungsgemäßen Verfahrens wird in Schritt a) Polyamid 4.6 - Pulver mit Polyetheramid vermischt und zu Pellets gepresst. Dabei können z.B. solche Polyetheramide verwendet werden, wie sie in der EP-A 0 761 715 offenbart sind.

Vorzugsweise wird im erfindungsgemäßen Verfahren das Polyetheramid in einem auf das Polyamid 4.6 bezogenen Gewichtsanteil von 5 bis 30 Gew.% eingesetzt.

Die in Schritt a) des erfindungsgemäßen Verfahrens zur Verfügung gestellten Pellets haben vorzugsweise eine zylinderähnliche Form, wobei Pellets mit einer Länge von 3 bis 7 mm und mit einer Breite von 2 bis 4 mm besonders bevorzugt werden.

Überraschenderweise wurde gefunden, dass bei Einsatz von Pellets in dem zuvor genannten Bereich der Zusammensetzungen an Polyamid 4.6 und Polyetheramid eine atmungsaktive Membran resultiert, deren Wasserdampfdurchlässigkeit höher ist, als man aufgrund des Anteils von Polyamid 4.6 und Polyetheramid im Gemisch und aufgrund der Wasserdampfdurchlässigkeit von reinem Polyamid 4.6 und reinem Polyetheramid erwarten würde.

In Schritt b) des erfindungsgemäßen Verfahrens werden die Pellets einem Extruder, vorzugsweise einem 3-Zonen-Schneckenextruder zugeführt.

Für das in Schritt c) des erfindungsgemäßen Verfahrens stattfindende Überführen der Pellets im Extruder in eine Schmelze weist die erste Extruderzone vorzugsweise eine Temperatur von 275 bis 285 °C, die zweite Extruderzone eine Temperatur von 305 bis 315 °C und die dritte Extruderzone eine Temperatur von 300 bis 310 °C auf.

In Schritt d) des erfindungsgemäßen Verfahrens wird die Schmelze zur Bildung eines Films durch eine Schlitzdüse auf eine bewegliche Fläche extrudiert, wobei der Schlitz der Düse vorzugsweise eine Dicke von 0,5 bis 0,7 mm hat.

In Schritt d) des erfindungsgemäßen Verfahrens wird der gebildete Film auf eine bewegte Fläche, z.B. auf ein Förderband gegossen. Vorzugsweise ist im erfindungsgemäßen Verfahren die bewegte Fläche eine beheizte Gießwalze, die vorzugsweise eine Temperatur von 110 bis 140 °C hat.

In Schritt f) wird der Film über eine Kühlwalze geführt, die vorzugsweise eine Temperatur von 50 bis 70 °C hat, und in Schritt g) aufgewickelt.

Wesentlich für die Atmungsaktivität der erfindungsgemäß hergestellten Membran ist, dass die Schritte c) bis g) des erfindungsgemäßen Verfahrens so durchgeführt werden, dass die aufgewickelte Membran eine Bruchdehnung von 250 bis 500 % in Längsrichtung und von 200 bis 500 % in Querrichtung aufweist.

Die der Erfindung zugrunde liegende Aufgabe wird des weiteren gelöst durch eine Membran, die nach dem vorstehend beschriebenen Verfahren herstellbar ist, wobei die aufgewickelte Membran eine Bruchdehnung von 250 bis 500 % in Längsrichtung und von 200 bis 500 % in Querrichtung aufweist.

Die erfindungsgemäße Membran ist nicht nur in hohem Maße atmungsaktiv, sondern zeigt auch eine im Vergleich zu den atmungsaktiven Membranen aus Polyetherester, Polyetheramid oder Polyurethan höhere Wärmebeständigkeit.

Unter dem in der Membran enthaltenen Polyamid 4.6 ist erfindungsgemäß nicht nur Polyamid 4.6, d.h. Polytetramethylenadipamid, sondern auch ein Copolymer zu verstehen, das aus mindestens 90 % Polytetramethylenadipamid - Einheiten und aus einem Comonomeren, wie z.B. Caprolactam besteht, wobei der Comonomeren Anteil vorzugsweise 5 bis 6 % beträgt.

Durch das Vorhandensein eines Antioxidans lässt sich die Wärmebeständigkeit der erfindungsgemäßen Membran noch weiter erhöhen, so dass die ein Antioxidans enthaltende Membran den weiter unten im Detail beschriebenen Ofen- und Wasserdichtigkeitstest besteht. Deshalb enthält die erfindungsgemäße Membran in einer bevorzugten Ausführungsform Polyamid 4.6 und ein handelsübliches Antioxidans, wie z.B. Irganox® 1098 oder Irganox® 1330 von Ciba Geigy oder das Kaliumiodid/Kupferiodid-System.

Vorzugsweise enthält die erfindungsgemäße Membran das Antioxidans in einer auf das Polyamid 4.6 bezogenen Menge von 0,1 bis 1 Gew.-%, besonders bevorzugt von 0,1 bis 0,5 Gew.%.

In einer weiteren bevorzugten Ausführungsform enthält die erfindungsgemäße Membran ein Gemisch aus Polyamid 4.6 und einem Polyetheramid, wobei letzteres z.B. ein in der EP-A 0 761 715 offenbartes Polyetheramid sein kann.

Vorzugsweise beträgt der auf das Polyamid 4.6 bezogene Anteil des Polyetheramids 5 bis 30 Gew.%. Überraschenderweise wurde gefunden, dass in dem genannten Bereich der Zusammensetzungen die Membran aus dem Gemisch von Polyamid 4.6 und Polyetheramid eine höhere Wasserdampfdurchlässigkeit aufweist als man aufgrund des Anteils von Polyamid 4.6 und Polyetheramid im Gemisch und aufgrund der Wasserdampfdurchlässigkeit von reinem Polyamid 4.6 und reinem Polyetheramid erwarten würde.

Die erfindungsgemäße Membran ist wegen ihrer Atmungsaktivität und ihrer Wärmebeständigkeit zur Herstellung von Wärmeschutzkleidung verwendbar.

In einer bevorzugten Ausführungsform wird die erfindungsgemäße Membran als Laminat verwendet, das aus der Membran und aus einem Vlies besteht, welches aus einem Gemisch von Aramid-Fasem und Polyamid-basierten Fasern, z.B. aus Basofil® -Fasern von BASF, zusammengesetzt ist.

Die Bruchdehnung der erfindungsgemäßen Membran wurde mit einer Membranbreite von 15 mm, einer Länge der eingespannten Membran von 100 mm und mit einer Geschwindigkeit von 500 mm/min gemessen.

Die erfindungsgemäße Membran wurde hinsichtlich ihrer Wasserdampfdurchlässigkeit gemäß ASTM E 96-66, Methode B mit der Modifikation T_{Wasser} = 30 °C, T_{Luft} = 20 °C, relative Feuchte = 60 % und Luftfluss = 2 m/s charakterisiert.

Die Wärmebeständigkeit der erfindungsgemäßen Membran wurde mit dem Ofenund Wasserdichtigkeitstest gemessen. Dazu wird die Membran zwischen zwei Aramid-Gewebestücke gelegt, in einen auf 260 °C vorgeheizten Ofen gelegt und bei 260 °C 5 Minuten lang (gemessen mit einer Stoppuhr) thermisch beansprucht. Danach wird die Membran aus dem Ofen genommen, abkühlen gelassen und dem Wasserdichtigkeitstest nach DIN 53886 unterworfen. Zu diesem Zweck wird die Membran auf das in der DIN 53886 beschriebene Wasserdichtigkeitstestgerät gespannt und einseitig mit Wasser beaufschlagt, wobei der Wasserdruck mit einer Geschwindigkeit von 10 mbar/min bis auf 150 mbar erhöht wird. Der Test gilt als bestanden, wenn kein Wassertropfen auf der nicht mit Wasser beaufschlagten Seite der Membran beobachtet wird.

Die Erfindung wird im den folgenden Beispielen näher erläutert.

### Beispiel 1:

Ein bei der Herstellung eines Copolymeren aus 94 % Polytetramethylenadipamid-Einheiten und 6 % Caprolactameinheiten angefallenes Pulver wird zu Pellets der Länge 4 bis 6 mm und der Breite 3 mm gepresst. Die Pellets werden mit 0,35 Gew.% Irganox® 1098 paniert und in einen 3-Zonen-Schneckenextruder überführt, dessen erste Zone eine Temperatur von 280°C, dessen zweite Zone eine Temperatur von 310 °C und dessen dritte Zone eine Temperatur von 305 °C hat. Die entstandene Schmelze wird in einer Menge von 16,1 kg/h bei einer Schlitzbreite von 800 mm durch eine Schlitzdüse, deren Schlitz eine Dicke von 0,6 mm hat, auf eine Gießwalze gegossen, die sich mit einer Geschwindigkeit von 18,3 m/min bewegt und eine Temperatur von 130 °C hat, von der Gießwalze mit einer Geschwindigkeit von 18,7 m/min abgezogen, über eine auf einer Temperatur von 60 °C befindliche Kühlwalze geführt, die sich mit einer Geschwindigkeit von 18,7 m/min bewegt, und mit einer Geschwindigkeit von 20,0 m/min aufgewickelt.

Die etwa 15 µm dicke Folie hat eine Bruchdehnung von 445 % in Längsrichtung und von 420 % in Querrichtung, eine Wasserdampfdurchlässigkeit von 1800 g/(m²·24h) und besteht den Ofen- und Wasserdichtigkeitstest.

### Beispiel 2:

Ein bei der Herstellung eines Copolymeren aus 94 % Polytetramethylenadipamid-Einheiten und 6 % Caprolactameinheiten angefallenes Pulver wird mit 10 Gew.-%, Polyetheramid-Granulat, bezogen auf das Copolymer aus Polytetramethylenadipamid und Caprolactam gemischt und zu Pellets der Länge 3 mm und der Breite 2 mm gepresst. Die Pellets werden mit 0,35 Gew.% Irganox® 1098 paniert und in einen 3-Zonen-Schneckenextruder überführt, dessen erste Zone eine Temperatur von 280°C, dessen zweite Zone eine Temperatur von 310 °C und dessen dritte Zone eine Temperatur von 305 °C hat. Die entstandene Schmelze wird in einer Menge von 16,1 kg/h bei einer Schlitzbreite von 800 mm durch eine Schlitzdüse, deren Schlitz eine Dicke von 0,6 mm hat, auf eine Gießwalze gegossen, die sich mit einer Geschwindigkeit von 18,3 m/min bewegt und eine Temperatur von 130 °C hat, von der Gießwalze mit einer Geschwindigkeit von 18,7 m/min abgezogen, über eine auf einer Temperatur von 60 °C befindliche Kühlwalze geführt, die sich mit einer Geschwindigkeit von 18,7 m/min bewegt, und mit einer Geschwindigkeit von 20,0 m/min aufgewickelt.

Die etwa 15 µm dicke Membran hat eine Bruchdehnung von 470 % in Längsrichtung und von 350 % in Querrichtung und besteht den Ofen- und Wasserdichtigkeitstest.

Da die Wasserdampfdurchlässigkeit (WDD) einer 15 µm dicken Membran eines Copolymeren aus 94 % Polytetramethylenadipamid-Einheiten und 6 % Caprolactam-Einheiten (A) 1800 g/(m²·24h) beträgt, und die WDD einer 15 µm dicken Membran aus Polyetheramid (B) 2800 g/(m²·24h) beträgt, würde man für die WDD einer Membran, die aus 90 Gew.-% (A) und 10 Gew.-% (B) besteht, einen Wert erwarten, der sich gemäß 0,9 · 1800 + 0,1 · 2800 = 1900 g/(m²·24h) berechnet.

Überraschenderweise zeigte jedoch die erfindungsgemäße Membran eine Wasser-dampfdurchlässigkeit von 2250 g/(m²·24h), d.h. einen um 18,4 % höheren Wert.

### Beispiel 3:

Ein bei der Herstellung eines Copolymeren aus 94 % Polytetramethylenadipamid-Einheiten und 6 % Caprolactameinheiten angefallenes Pulver wird mit 30 Gew.-%, Polyetheramid-Granulat, bezogen auf das Copolymer aus Polytetramethylenadipamid und Caprolactam gemischt und zu Pellets der Länge 3 mm und der Breite 2 mm gepresst. Die Pellets werden mit 0,35 Gew.% Irganox® 1098 paniert und in einen 3-Zonen-Schneckenextruder überführt, dessen erste Zone eine Temperatur von 280°C, dessen zweite Zone eine Temperatur von 310 °C und dessen dritte Zone eine Temperatur von 305 °C hat. Die entstandene Schmelze wird in einer Menge von 16,1 kg/h bei einer Schlitzbreite von 800 mm durch eine Schlitzdüse, deren Schlitz eine Dicke von 0,6 mm hat, auf eine Gießwalze gegossen, die sich mit einer Geschwindigkeit von 18,3 m/min bewegt und eine Temperatur von 130 °C hat, von der Gießwalze mit einer Geschwindigkeit von 18,7 m/min abgezogen, über eine auf 60 °C befindliche Kühlwalze geführt, die sich mit einer Geschwindigkeit von 18,7 m/min bewegt, und mit einer Geschwindigkeit von 20,0 m/min aufgewickelt.

Die etwa 15 µm dicke Membran hat eine Bruchdehnung von 350 % in Längsrichtung und von 250 % in Querrichtung und besteht den Ofen- und Wasserdichtigkeitstest.

Da die Wasserdampfdurchlässigkeit (WDD) einer 15 µm dicken Membran eines Copolymeren aus 94 % Polytetramethylenadipamid-Einheiten und 6 % Caprolactam-Einheiten (A) 1800 g/(m²·24h) beträgt und die WDD einer 15 µm dicken Membran aus Polyetheramid (B) 2800 g/(m²·24) beträgt, würde man für die WDD einer Membran, die aus 70 Gew.-% (A) und 30 Gew.-% (B) besteht, einen Wert erwarten, der sich gemäß 0,7 ·1800 + 0,3 · 2800 = 2100 g/(m²·24h) berechnet.

Überraschenderweise zeigte jedoch die erfindungsgemäße Membran eine Wasserdampfdurchlässigkeit von 2340 g/(m²·24h), d.h. einen um 11,4 % höheren Wert.

## Patentansprüche

1. Verfahren zur Herstellung einer porenfreien atmungsaktiven Membran umfassend die Schritte
a) Zur Verfügung stellen von Pellets, welche aus Polyamid 4.6 und gegebenenfalls aus einem Antioxidans bestehen, wobei die Pellets aus einem Pulver gepresst wurden, das zumindest aus dem bei der Herstellung von Polyamid 4.6 anfallenden Polyamid 4.6 - Pulver besteht,
b) Zuführen der Pellets in einen Extruder,
c) Überführen der Pellets im Extruder in eine Schmelze,
d) Extrudieren der Schmelze in einer Menge von 10,0 bis 20,0 kg/h durch eine Schlitzdüse mit einer Schlitzdicke von 0,4 bis 0,8 mm und einer Schlitzbreite von 600 bis 1000 mm zur Bildung eines Films auf eine bewegte Fläche, die sich mit einer Geschwindigkeit von 5,2 bis 43,1 m/min bewegt,
e) Abziehen des Films von der bewegten Fläche mit einer Geschwindigkeit von 5,3 bis 44,0 m/min,
f) Führen des Films über eine Kühlwalze, die sich mit einer Geschwindigkeit von 5,3 bis 44,0 m/min bewegt und
g) Aufwickeln der erhaltenen Membran mit einer Geschwindigkeit von 5,5 bis 47,0 m/min.

2. Verfahren nach Anspruch 1, **dadurch gekennzeichnet, dass** in Schritt a) die Pellets aus einem Pulver gepresst werden, das aus dem bei der Herstellung von Polyamid 4.6 angefallenen Polyamid - Pulver und aus einem Antioxidans besteht.

3. Verfahren nach Anspruch 2, **dadurch gekennzeichnet, dass** in Schritt a) Pellets aus dem bei der Herstellung von Polyamid 4.6 angefallenen Polyamid 4.6 - Pulver gepresst und anschließend mit einem Antioxidans paniert werden.

4. Verfahren nach Anspruch 2 oder 3, **dadurch gekennzeichnet, dass** der auf das Polyamid 4.6 bezogene Anteil des Antioxidans 0,1 bis 1 Gew.-% beträgt.

5. Verfahren nach Anspruch 4, **dadurch gekennzeichnet, dass** der auf das Polyamid 4.6 bezogene Anteil des Antioxidans 0,1 bis 0,5 Gew.-% beträgt.

6. Verfahren nach einem oder mehreren der Ansprüche 1 bis 5, **dadurch gekennzeichnet, dass** in Schritt a) Polyamid 4.6 - Pulver mit Polyetheramid - Pulver vermischt und zu Pellets gepresst wird.

7. Verfahren nach einem oder mehreren der Ansprüche 1 bis 6, **dadurch gekennzeichnet, dass** in Schritt a) das Polyetheramid in einem auf das Polyamid 4.6 bezogenen Gewichtsanteil von 5 bis 30 Gew.-% eingesetzt wird.

8. Verfahren nach einem oder mehreren der Ansprüche 1 bis 7, **dadurch gekennzeichnet, dass** in Schritt a) Pellets mit einer Länge von 3 bis 7 mm und mit einer Breite von 2 bis 4 mm zur Verfügung gestellt werden.

9. Verfahren nach einem oder mehreren der Ansprüche 1 bis 8, **dadurch gekennzeichnet, dass** in Schritt b) die Pellets einem 3-Zonen-Schneckenextruder zugeführt werden.

10. Verfahren nach Anspruch 9, **dadurch gekennzeichnet, dass** die erste Extruderzone eine Temperatur von 275 bis 285 °C, die zweite Extruderzone eine Temperatur von 305 bis 315 °C und die dritte Extruderzone eine Temperatur von 300 bis 310 °C hat.

11. Verfahren nach einem oder mehreren der Ansprüche 1 bis 10, **dadurch gekennzeichnet, dass** in Schritt d) die Schmelze durch eine Schlitzdüse extrudiert wird, wobei der Schlitz der Düse eine Dicke von 0,5 bis 0,7 mm Dicke hat.

12. Verfahren nach einem oder mehreren der Ansprüche 1 bis 11, **dadurch gekennzeichnet, dass** in Schritt d) die bewegte Fläche eine beheizte Gießwalze ist.

13. Verfahren nach Anspruch 12, **dadurch gekennzeichnet, dass** die Gießwalze eine Temperatur von 110 bis 140 °C hat.

14. Verfahren nach einem oder mehreren der Ansprüche 1 bis 13, **dadurch gekennzeichnet, dass** in Schritt f) die Kühlwalze eine Temperatur von 50 bis 70 °C hat.

15. Membran herstellbar nach einem oder mehreren der Ansprüche 1 bis 14, wobei die aufgewickelte Membran eine Bruchdehnung von 250 bis 500 % in Längsrichtung und von 200 bis 500 % in Querrichtung aufweist.

16. Membran nach Anspruch 15, **dadurch gekennzeichnet, dass** die Membran Polyamid 4.6 und ein Antioxidans enthält.

17. Membran nach Anspruch 16, **dadurch gekennzeichnet, dass** die Membran das Antioxidans in einer Menge von 0,1 bis 1 Gew.-% bezogen auf das Polyamid 4.6 enthält.

18. Membran nach Anspruch 17, **dadurch gekennzeichnet, dass** die Membran das Antioxidans in einer Menge von 0,1 bis 0,5 Gew.-% bezogen auf das Polyamid 4.6 enthält.

19. Membran nach einem oder mehreren der Ansprüche 15 bis 19, **dadurch gekennzeichnet, dass** die Membran ein Gemisch aus Polyamid 4.6 und einem Polyetheramid enthält.

20. Membran nach Anspruch 19, **dadurch gekennzeichnet, dass** der auf das Polyamid 4.6 bezogene Anteil des Polyetheramids 5 bis 30 Gew.-% beträgt.

21. Verwendung der nach einem oder mehreren der Ansprüche 1 bis 14 hergestellten Membran oder der Membran nach einem oder mehreren der Ansprüche 15 bis 20 zur Herstellung von Wärmeschutzkleidung.

22. Verwendung nach Anspruch 21, **dadurch gekennzeichnet, dass** die Membran als Laminat verwendet wird, das aus der Membran und aus einem Vlies besteht, welches aus einem Gemisch von Aramid-Fasern und Polyamid-basierten Fasern zusammengesetzt ist.

## Claims

1. Process for producing a non-porous, breathable membrane, comprising the following steps:
a) providing pellets consisting of nylon-4,6 and possibly an antioxidant, where the pellets have been pressed from a powder that consists of at least the nylon-4,6 powder resulting from the manufacture of nylon-4,6,
b) feeding the pellets to an extruder,
c) converting the pellets in the extruder into a melt,
d) extruding the melt at a rate of 10.0 to 20.0 kg/h through a slit die, with a slit thickness of 0.4 to 0.8 mm and a slit width of 600 to 1000 mm, to form a film on a moving surface moving at a rate of 5.2 to 43.1 m/min,
e) withdrawing the film from the moving surface at a rate of 5.3 to 44.0 m/min,
f) passing the film over a cooling roller moving at a rate of 5.3 to 44.0 m/min, and
g) winding up the resulting membrane at a rate of 5.5 to 47.0 m/min.

2. Process according to Claim 1, **characterized in that** the pellets in step a) are pressed from a powder consisting of the nylon powder produced during the manufacture of nylon-4,6 and an antioxidant.

3. Process according to Claim 2, **characterized in that** the pellets in step a) are pressed from the nylon-4,6 powder produced during the manufacture of nylon-4,6 and then coated with an antioxidant.

4. Process according to Claim 2 or 3, **characterized in that** the fraction of the antioxidant is 0.1 to 1% by weight, referred to the nylon-4,6.

5. Process according to Claim 4, **characterized in that** the fraction of the antioxidant is 0.1 to 0.5% by weight, referred to the nylon-4,6.

6. Process according to one or more of Claims 1 to 5, **characterized in that** in step a) nylon-4,6 powder is mixed with polyether amide powder and pressed into pellets.

7. Process according to one or more of Claims 1 to 6, **characterized in that** in step a) the polyether amide used is 5 to 30% by weight, referred to the nylon-4,6.

8. Process according to one or more of Claims 1 to 7, **characterized in that** in step a) pellets are provided with a length of 3 to 7 mm and a width of 2 to 4 mm.

9. Process according to one or more of Claims 1 to 8, **characterized in that** in step b) the pellets are fed to a 3-zone screw extruder.

10. Process according to Claim 9, **characterized in that** the first extruder zone has a temperature of 275 to 285°C, the second extruder zone a temperature of 305 to 315°C, and the third extruder zone a temperature of 300 to 310°C.

11. Process according to one or more of Claims 1 to 10, **characterized in that** in step d) the melt is extruded through a slit die with a slit thickness of 0.5 to 0.7 mm.

12. Process according to one or more of Claims 1 to 11, **characterized in that** in step d) the moving surface is a heated casting roller.

13. Process according to Claim 12, **characterized in that** the casting roller has a temperature of 110 to 140°C.

14. Process according to one or more of Claims 1 to 13, **characterized in that** in step f) the cooling roller has a temperature of 50 to 70°C.

15. Membrane producible according to one or more of Claims 1 to 14, the wound-up membrane having an elongation at rupture of 250 to 500% in the longitudinal direction and 200 to 500% in the transverse direction.

16. Membrane according to Claim 15, **characterized in that** the membrane contains nylon-4,6 and an antioxidant.

17. Membrane according to Claim 16, **characterized in that** the membrane contains the antioxidant in an amount of 0.1 to 1% by weight, referred to the nylon-4,6.

18. Membrane according to Claim 17, **characterized in that** the membrane contains the antioxidant in an amount of 0.1 to 0.5% by weight, referred to the nylon-4,6.

19. Membrane according to one or more of Claims 15 to 19, **characterized in that** the membrane contains a mixture of nylon-4,6 and a polyether amide.

20. Membrane according to Claim 19, **characterized in that** the fraction of the polyether amide is 5 to 30% by weight, referred to the nylon-4,6.

21. Use of the membrane produced according to one or more of Claims 1 to 14 or the membrane according to one or more of claims 15 to 20 for producing thermally protective clothing.

22. Use according to Claim 21, **characterized in that** the membrane is used as a laminate consisting of the membrane and a nonwoven composed of a blend of aramide and nylon-based fibers.

## Revendications

1. Procédé pour la production d'une membrane perméable à l'air, exempte de pores, procédé qui comporte les étapes consistant à :
a) mettre à disposition des pellets qui sont constitués de polyamide 4.6, et le cas échéant d'un antioxydant, ces pellets ayant été obtenus par compression d'une poudre qui est constituée au moins par de la poudre de polyamide 4.6 qui est produite lors de la fabrication de polyamide 4.6,
b) amener les pellets à une extrudeuse,
c) transformer les pellets dans l'extrudeuse en une masse fondue,
d) extruder la masse fondue en une quantité de 10,0 à 20,0 kg/h à travers une buse à fente possédant une épaisseur de fente de 0,4 à 0,8 mm et une largeur de fente de 600 à 1000 mm, en vue de la formation d'un film sur une surface en mouvement qui se déplace à une vitesse de 5,2 à 43,1 m/min,
e) séparer le film de la surface en mouvement avec une vitesse de 5,3 à 44,0 m/min,
f) faire passer le film sur un cylindre de refroidissement qui se meut à une vitesse de 5,3 à 44,0 m/min,
g) enrouler la membrane obtenue à une vitesse de 5,3 à 44,0 m/min.

2. Procédé suivant la revendication 1 **caractérisé en ce que**, au cours de l'étape a), les pellets sont pressés à partir d'une poudre qui est constituée de poudre de polyamide produite lors de la fabrication de polyamide 4.6, ainsi que d'un antioxydant.

3. Procédé suivant la revendication 1, **caractérisé en ce que**, au cours de l'étape a), des pellets sont pressés à partir de la poudre de polyamide 4.6 produite lors de la fabrication de polyamide 4.6, et **en ce que** ces pellets sont revêtus ultérieurement d'un antioxydant.

4. Procédé suivant la revendication 2 ou 3, **caractérisé en ce que** la proportion de l'antioxydant rapportée au polyamide 4.6 s'élève à 0,1 - 1,0 % en poids.

5. Procédé suivant la revendication 4, **caractérisé en ce que** la proportion de l'antioxydant rapportée au polyamide 4.6 s'élève à 0,1 - 0,5 % en poids.

6. Procédé suivant l'une ou plusieurs des revendications 1 à 5 **caractérisé en ce que**, au cours de l'étape a), de la poudre de polyamide 4.6 est mélangée à de la poudre de polyétheramide et est comprimée sous forme de pellets.

7. Procédé suivant l'une ou plusieurs des revendications 1 à 6 **caractérisé en ce que**, au cours de l'étape a), le polyétheramide est mis en oeuvre dans une proportion de poids de 5 à 30 % en poids par rapport à celui du polyamide 4.6.

8. Procédé suivant l'une ou plusieurs des revendications 1 à 7 **caractérisé en ce que**, au cours de l'étape a), des pellets avec une longueur de 3 à 7 mm et une largeur de 2 à 4 mm sont mis à disposition.

9. Procédé suivant l'une ou plusieurs des revendications 1 à 8 **caractérisé en ce que**, au cours de l'étape b), les pellets sont amenés à une extrudeuse à vis à trois zones.

10. Procédé suivant la revendication 9, **caractérisé en ce que** la première zone d'extrusion est à une température de 275 - 285 °C, la deuxième zone d'extrusion est à une température de 305 - 315 °C, et la troisième zone d'extrusion est à une température de 300 - 310 °C.

11. Procédé suivant l'une ou plusieurs des revendications 1 à 10 **caractérisé en ce que**, au cours de l'étape d), la masse fondue est extrudée à travers une buse à fente, la fente de la buse présentant une épaisseur de 0,5 à 0,7 mm.

12. Procédé suivant l'une ou plusieurs des revendications 1 à 11 **caractérisé en ce que**, au cours de l'étape d), la surface en mouvement est constituée d'un cylindre de coulée.

13. Procédé suivant la revendication 12, **caractérisé en ce que** le cylindre de coulée présente une température de 110 - 140 °C.

14. Procédé suivant l'une ou plusieurs des revendications 1 à 13 **caractérisé en ce que**, au cours de l'étape f), le cylindre de refroidissement présente une température de 50 - 70 °C.

15. Membrane qui peut être fabriquée suivant l'une ou plusieurs des revendications 1 à 14, dans laquelle la membrane enroulée présente un allongement à la rupture de 250 - 500 % dans la direction longitudinale, et de 250 - 500 % dans la direction transversale.

16. Membrane suivant la revendication 15, **caractérisée en ce que** la membrane contient du polyamide 4.6 et un antioxydant.

17. Membrane suivant la revendication 16, **caractérisée en ce que** la membrane contient l'antioxydant en une quantité de 0,1 - 1,0 % en poids rapportée à celle du polyamide 4.6.

18. Membrane suivant la revendication 17, **caractérisée en ce que** la membrane contient l'antioxydant en une quantité de 0,1 - 0,5 % en poids rapportée à celle du polyamide 4.6.

19. Membrane suivant l'une ou plusieurs des revendications 15 à 19, **caractérisée en ce que** la membrane contient un mélange de polyamide 4.6 et d'un polyétheramide.

20. Membrane suivant la revendication 19, **caractérisée en ce que** la proportion de polyétheramide s'élève à 5 à 30 % en poids par rapport à celle du polyamide 4.6.

21. Utilisation de la membrane produite suivant l'une ou plusieurs des revendications 1 à 14, ou de la membrane suivant l'une ou plusieurs des revendications 15 à 20 pour la fabrication de vêtements de protection contre le froid.

22. Utilisation suivant la revendication 21, **caractérisée en ce que** la membrane est utilisée sous forme d'un produit feuilleté constitué de la membrane et d'un tissu non tissé qui est composé d'un mélange de fibres d'aramide et de fibres à base de polyamide.
